Europäisches Patentamt

European Patent Office

Office européen des brevets

(11) Publication number: **0 006 955**
B1

(12) EUROPEAN PATENT SPECIFICATION

(45) Date of publication of patent specification: 26.01.83

(21) Application number: 78900294.6

(22) Date of filing: 08.11.78

(86) International application number:
PCT/US78/00145

(87) International publication number:
WO 79/00286 31.05.79 Gazette 79/11

(51) Int. Cl.³: F 01 N 1/02, F 01 N 7/02,
F 16 L 55/02, E 04 F 17/04

(54) PACKLESS SILENCER.

(30) Priority: 14.11.77 US 851300

(43) Date of publication of application:
23.01.80 Bulletin 80/2

(45) Publication of the grant of the patent:
26.01.83 Bulletin 83/4

(84) Designated Contracting States:
CH DE FR GB SE

(56) References cited:
US - A - 29 161 01
US - A - 30 333 07
US - A - 31 956 79
US - A - 34 371 73
US - A - 35 113 36

(73) Proprietor: INDUSTRIAL ACOUSTICS COMPANY, INC.
1160 Commerce Avenue
Bronx, NY 10462 (US)

(72) Inventor: INGARD, Uno
Kittery Point, ME 03905 (US)
Inventor: MORGAN, James. A.
182 Cottage Road
Wyckoff, NJ 07481 (US)
Inventor: HIRSCHORN, Martin
420 East 51st Street
New York, NY 10022 (US)

(74) Representative: Sorrell, Terence Gordon
Sorrell & Son Otham
Maidstone Kent ME15 8RR (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Packless silencer

## Background of the invention

Conventional silencers of the type in which the silencer is inserted into the flow of gas to attenuate noise travelling in the gas stream have generally relied upon viscous friction in the pores of a cavity filler material.

A conventional silencer typically includes a duct member within which is positioned one or more silencer elements consisting of a perforated facing plate behind which is positioned a filler material, such as foam, rock-wool, fiberglass or other fibrous acoustically absorbtive bulk material. The filler may be referred to as packing.

Because these packed duct silencers rely on absorbtion by the packing, the perforated facing sheet is designed to provide optimum sound access from the flow passage to the packing material. Face sheet open face area in these silencers are typically 20% and more.

The use of packing to absorb acoustical noises introduces problems in many applications; the packing tends to erode under high velocity conditions; the packing may absorb toxic or flammable substances or microorganisms; the packing is subject to attach by chemicals; and in the event of fire, some otherwise desirable packings may provide fuel or produce toxic gases.

The present invention provides an improved form of packless acoustic silencer including a duct member having a pair of opposed, upstanding sidewalls, for attenuating noise associated with a fluid medium passing through said silencer.

United States Patent Specification No. 3195679 (Duda et al) relates to a packless silencer. However, the present invention is both structurally and functionally distinguishable thereover. Duda et al provides "in stream silencing apparatus means for developing a plurality of jets and for modulating the velocity of the jets with a noise to be attenuated whereby acoustic energy is transformed into turbulence which is dissipated in turn as heat to thus provide attenuation of said noise". (column 2, lines 7—12). In order to effect noise attenuation, Duda et al relies on specific structure the elements of which cooperating with one another in a particular manner. Specifically, the Duda et al silencer includes a plurality of cells, the leading edge of each cell being smoothly curved and provided with *groups* of perforations or entrance ports 26. (column 2, line 64—68). The sides 27 of each cell are provided with *distributed sets of* modulation perforations 28. (column 3, lines 11—15). In addition, installed in each cell is a corrugated septum which is arranged such that "each corrugation is associated with and assigned to one group of entrance ports 26.... Moreover, the open area of each corrugation defines and circumscribes a group 16 of the side modulation perforations 28. Accordingly, each group of ports 26 is primarily in communication with a group of modulation perforations 28 on the side 27 closest to these ports and the ports are largely isolated from the other groups of ports and perforations". (column 3 lines 21—40).

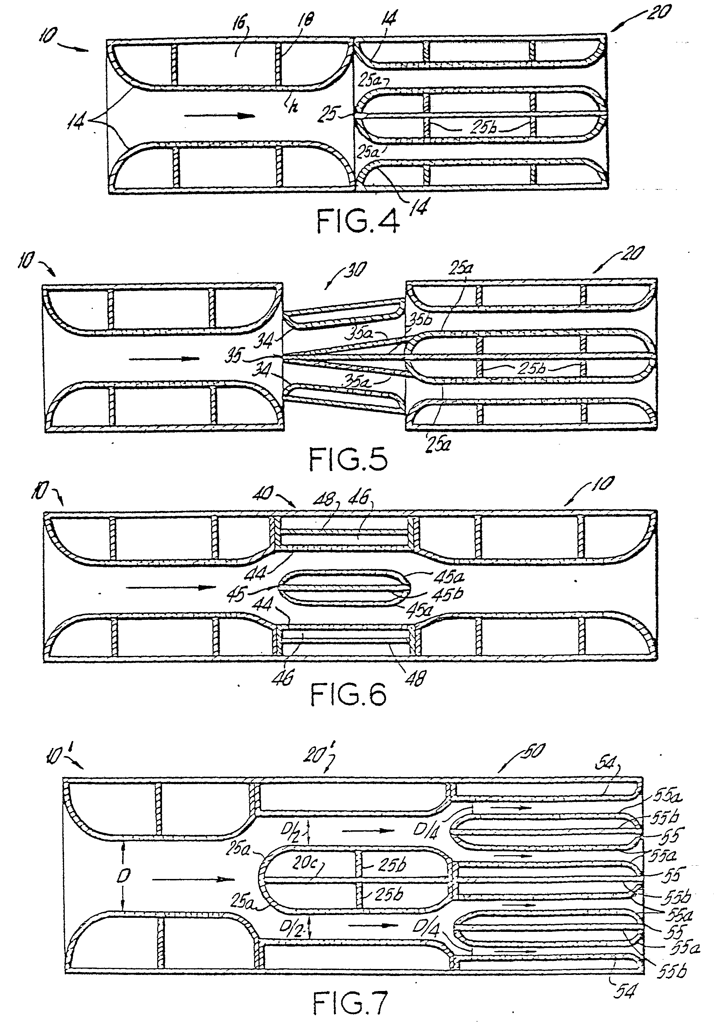

Referring to Figure 4, a noise-bearing stream enters into the Duda et al silencer and is split by the banks of cells into branches. Each branch stream flows between the adjacent perforated walls 27 of adjacent cells. In addition, because of a pressure differential which exists between the leading edge 25 of each cell and of sides 27 thereof, and by virtue of ports 26 and modulation perforations 28, an additional flow occurs from the ports 26 to the modulation perforations 28 of the corresponding cell compartment. In the region of perforations 28 there is an interaction of the noise modulated jet component and the noise component passing through perforations 28. (see column 3, lines 66—75 and column 4, lines 1—19). It is clear, that in accordance with the Duda et al reference, "certain conditions must be established and practices observed" in order to develop the desired attenuated turbulence. A key factor in the Duda et al silencer, which is also referred to as a "turbulence generator" (column 4, line 54) is that the means for providing the modulated jet flow *must* develop a pressure differential. This is accomplished by forming the leading edge of the cell so as to provide stagnation points, and more particularly, by the specific arrangement of the groups of entrance ports and modulation perforations and the cooperation therebetween. It is also clear that Duda et al relies on a flow through each silencer cell.

In contrast, applicants' invention comprises a pair of spaced apart facing panels each of which including inner and outer side walls and a pair of end walls, the inner sidewalls being perforated "having an open area in the range of 2 to 10%, said perforations each having an effective diameter in the range of from 0.032 inch to 0.125 inch (0.8 mm to 3.2 mm) respectively for facing panels having a thickness of from 26 gauge (0.45 mm) to 11 gauge (2.75 mm), "each of the outer sidewalls and the end walls being impervious to the fluid *such that there is no net flow of fluid through said facing panels*". Thus, whereas the Duda et al reference relies on a flow through each silencer cell and of a particular arrangement of groups of entrance ports with sets of modulation apertures to effect the required pressure differential and modulation of flow, applicants' invention employs facing panels including perforated inner sidewall portions having a certain open area and perforation parameter which along with the particular overall construction of the silencer effects noise attenuation by flow resistance without significant generation of self noise.

United States Patent Specification No. 3033307 (Sanders et al) relates to a straight through, in line sound attenuator which relies on a particular combination of configurations for operation. Specifically, the Sanders, et al noise attenuator includes a flow path formed of a converging entrance E, an intermediate section having a constant, parallel, cross-section I, and a diverging exit section X. The convergent arcuate type of throat entrance E was selected to provide a low pressure loss without excess friction, that would result, for instance, from a more abrupt entrance. The constant cross-section throat area was selected from earlier art teachings where it was believed that in order to achieve noise attenuation of air flow, one should have the longest, narrowest, parallel passage possible in order to provide an optimum thickness of absorbent material, for the longest the distance, surrounding the flow. The diverging exit section X was chosen to provide for expansion of flow from the constant cross-section throat area to the duct or pipe cross-section area. In accordance with such an arrangement, a Sanders, et al structure enables acoustic treatment of the medium in a constricted high perimeter/area region with a subsequent expansion and concurrent acoustic treatment. As indicated in column 4, lines 50—54, a Sanders et al invention is based upon the finding that "a comparatively large divergent angle when combined with such an abrupt discontinuity" can produce a minimum pressure drop if the angle of divergence is properly selected in combination with the area change at the discontinuity. In addition, it is apparent that the specific Sanders et al structure which combines an abrupt discontinuity with a large divergent angle reduces problems associated with the generation of self noise by the medium. In contrast to the Sanders, et al structure which requires a large divergent angle combined with an abrupt discontinuity, the applicants invention provide a packless silencer comprising a pair of opposed, spaced apart facing panels, each facing panel including a "substantially flat center wall portion" and a "pair of curved end wall portions", said center wall portions being generally parallel to one another and perforated "having an open area in the range of from 2 to 10%, said perforations each having an effective diameter in the range of from 0.032 inch to 0.125 (0.8 to 3.2 mm) inch respectively for facing panels having a thickness of from 26 gauge (0.45 mm) to 11 gauge (2.75 mm), each of the duct sidewalls and facing panel end walls being impervious to the fluid such that there is no net flow of the fluid through said facing panels".

Summary of the invention

The present invention overcomes the shortcomings of the prior art by making use of a commercially available perforated face sheet having an open area in the range of 2 to 10% to provide suitable acoustic flow resistance which is enhanced by the flow present in the silencer passages as a normal consequence of its use.

By proper choice of perforation geometry in a thin sheet of stainless, cold rolled, galvanized steel, aluminum or other metallic or synthetic material, broad band noise dissipation of a useful magnitude can be obtained without the use of packing and without generating unacceptable levels of self-noise.

Description of the drawings

Figure 1 is a perspective view illustrating a packless acoustic silencer of the present invention;

Figure 2 is a cross-sectional view taken along line 2—2 in Figure 1;

Figure 3 is a cross-sectional view illustrating a series arrangement of silencers in accordance with the present invention;

Figure 4 is a cross-sectional view of a silencer of Figure 1 joined with a silencer of the same type, but with cavity depth chosen to enhance performance at a higher frequency;

Figure 5 is a cross-sectional view of two silencers of Figure 4 joined by a transition member designed to reduce restriction to air flow while further supplementing high frequency performance;

Figure 6 is a cross-sectional view of two silencers of Figure 1 joined by a transition member with a splitter;

Figure 7 is a cross-sectional view of a triple tuned silencer in which each of three modules provides broad band performance but each of which is turned for peak performance at a different frequency; and

Figures 8—11 are graphs of various silencer performance correlations as function of octave band frequency.

Detailed description of a preferred embodiment

While this invention is susceptible of embodiment in many different forms, there is shown in the drawings and will hereinafter be described in detail a preferred embodiment of the invention, and modifications thereto, with the understanding that the present disclosure is to be considered as an exemplification of the principles of the invention and is not intended to limit the invention to the embodiments illustrated.

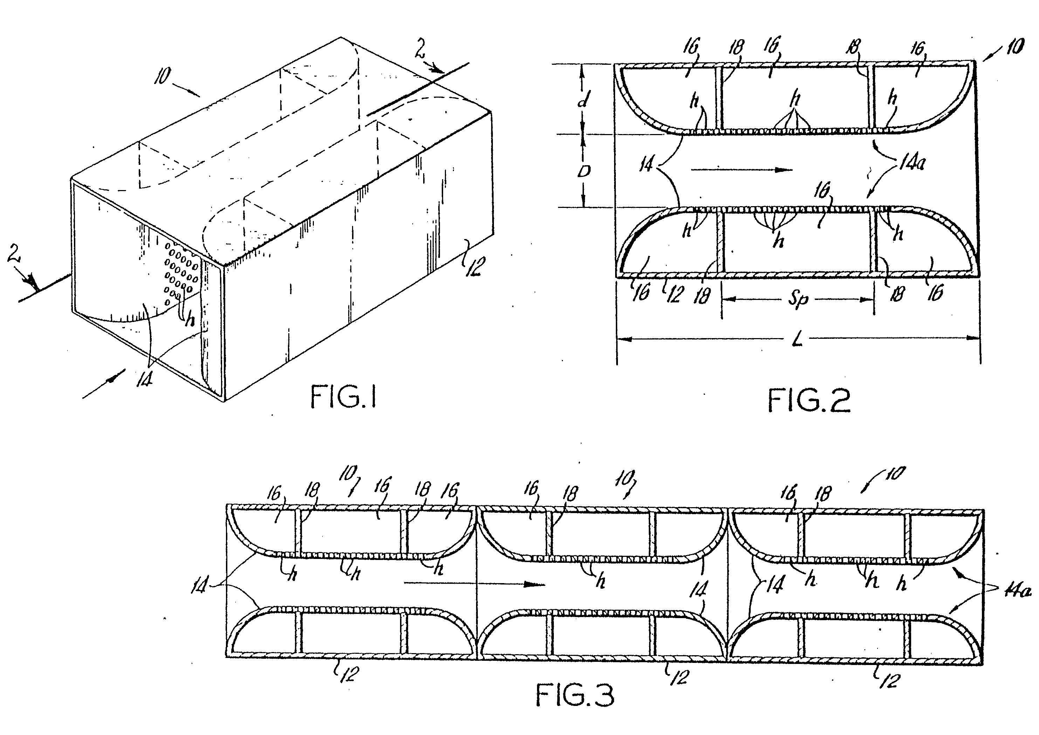

Figures 1 and 2 show a packless acoustic silencer 10 which includes a four sided duct member 12. Within the duct is positioned a pair of opposed facing panels 14 having a generally flattened semi-elliptical shape. The opposing flat portions 14a of each panel are perforated to provide a plurality of holes h which open to chambers (or cavities) 16 formed behind each panel and separated by partition walls 18.

Silencer 10 is adapted to be placed in a duct system, e.g., heat, ventilating and air conditioning duct. The gas flow, e.g. air, is in the direction indicated by the arrow although gas flow may also be reversed. Duct member 12 may be made of galvanized sheet metal or other materials.

Facing panel 14 is made from galvanized or stainless steel or other metallic or non-metallic, structurally stable material. Advantageously, the perforations have a hole diameter as small as is economically available from a conventional perforation punching process. A diameter of 0.032 or 0.046 inch (0.8 to 1.2 mm) is suitable for 26 gauge (0.45 mm) material, applicable to an air conditioning silencer; and 0.125 (3.2 mm) is suitable for 11 gauge (2.75 mm) steel which might be used in a gas turbine silencer. Advantageously, the spacing of the perforations h is such that an open area ratio of less than 20%, preferably in the range of 2 to 10% is achieved along the face panels. The thickness of the face panel may be in the range of 26 gauge to 11 gauge (0.45 to 2.75 mm). Lighter gauges of corrosion resistant material might be used if provision is made for structural support and stiffening. Heavier gauge might be used in some special applications, but probably with a loss of sound dissipation efficiency.

The perforated panel or sheet 14 is characterized by its hole diameter $d_h$, hole separation $S_h$ and sheet thickness t. The acoustical (dynamic) impedance of the sheet $Z_s$, consists of a resistive part $R_s$ and a reactive (mass reactive) part $X_s$. The acoustical impedance of the air cavity 16 behind the sheet depends upon the depth d and the spacing between partitions $S_p$. The impedance of the cavities 16 is mainly reactive, representing a stiffness at low frequencies with a corresponding reactance $X_c$.

The attenuation of the silencer may be expressed in terms of an impedance Z which is the sum of the sheet impedance $Z_s$ and the cavity reactance.

The total resistance is equal to the sheet resistance $R_s$ and the total reactance X is the sum of the sheet and cavity reactance, $X=X_s+X_c$.

Attenuation is a complex function of $R_s$ and X. As a design guide, it has been found that optimization of the attenuation is approximately equivalent to maximization of the following quantity:

$$\frac{R_s}{R_s^2+(X_s+X_c)^2}$$

Thus, $R_s$ cannot be too small or too large and $(X_s+X_c)$ cannot be too large.

Optimization of the resistive factor for silencers suited to the applications previously noted is obtained with an acoustic flow resistance. $R_s$ in the range of 1 to 4 $\rho c$ where $\rho c$ is the characteristic resistance of gas, e.g. air. - - $\rho$ being density and c being the speed of sound for the particular application. This resistance in prior art silencers has been provided by the viscous friction in the pores of resistive sheet materials.

In the present invention, however, an optimum flow resistance is produced by interaction of mean flow in the duct with the perforated facing panel. The mechanism, through which mean flow produces an optimum resistance, is related to an acoustically induced deflection or "switching" of some of the mean flow in and out of the perforations. This switching requires energy which is taken from the sound field. This effect, first observed by C.E. McAuliffe in 1950. *Study of Effect of Grazing Flow on Acoustical Characteristics of an Aperture*, M. S. Thesis. Department of Naval Architecture, M.I.T. can be expressed as an equivalent acoustic resistance of the sheet.

In addition, the total attenuation depends on the width D of the silencer flow passage and the length L.

In utilizing a perforated sheet chosen to provide (in conjunction with mean flow) the desired properties for dissipation of sound, a serious problem arises which, until the present invention, prevented the use of perforated sheets to form a packless silencer. The problem, initially referred to as "whistle", has to do with the self-noise which was produced by interaction of flow with the sound and with the perforations in the sheet.

The self-noise produced by a silencer depends on the flow speed and on the geometrical parameters of the perforated sheet.

Theoretical analysis has provided some guidelines for optimization of attenuation. However, there is at present no reliable theoretical analysis from which the level of self-noise can be predicted, and applicants have had to rely on experimental studies to establish self-noise characteristics.

A combined theoretical and experimental investigation, involving tests of over a hundred configurations, has led applicants to a range of design parameters which yield the maximum possible attenuation with self-noise acceptable even in critical HVAC applications which do not complicate, or significantly increase the cost of, the perforated resistive sheet.

Experimental investigation confirmed that optimum properties of sound dissipation are obtained with perforated open areas in the range of 2.5 to 10%. A correlation of self-noise level with mean flow velocity and percent open area, and a correlation of peak self-noise frequency with mean flow velocity and the perforation geometry have been found. Discovery of a correlation of self-noise level with perforation geometry permits the reduction in self-noise of as much as 30 decibels by choices of perforation geometry that still fall within the range of economically producible and commercially available perforated metal sheets.

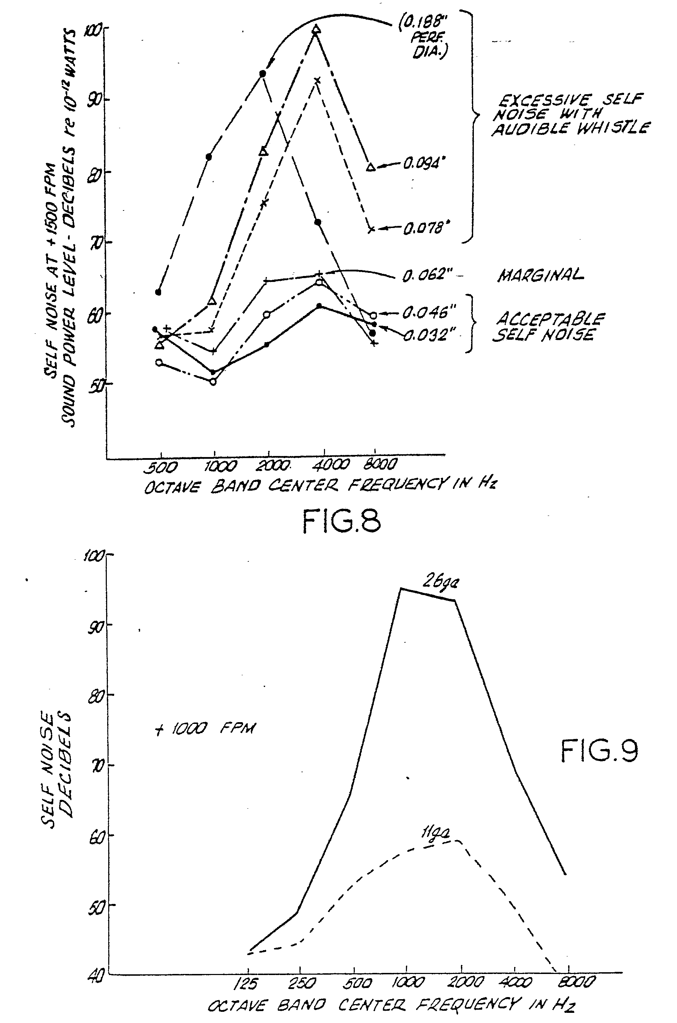

The appended graphs, Figures 8—11, illustrate some of the significant correlations that applicants have obtained. Figure 8 shows self-noise for packless silencers with various face sheet perforation diameters but otherwise of identical configuration and construction and at the same mean flow velocity. The perforated face sheet in each was 26 gauge (0.45 mm) with a 2-1/2% open area. The perforation diameters .032, .046, .062, .078, .094, .125 and .188 (0.8, 1.2, 1.6, 2.0, 2.4, 3.2, and 4.8 mm). The air flow speed is 1500 feet (475 m) per minute (FPM).

Figure 9 shows self-noise under similar conditions as described above except that the two silencers compared have perforations of the same diameter (3.22 mm) but have different perforation geometries in that thickness of the perforated sheets is different (26 gauge 0.45 mm and 11 gauge (2.75 mm) with flow at 1000 FPM (3.05 metres per minute).

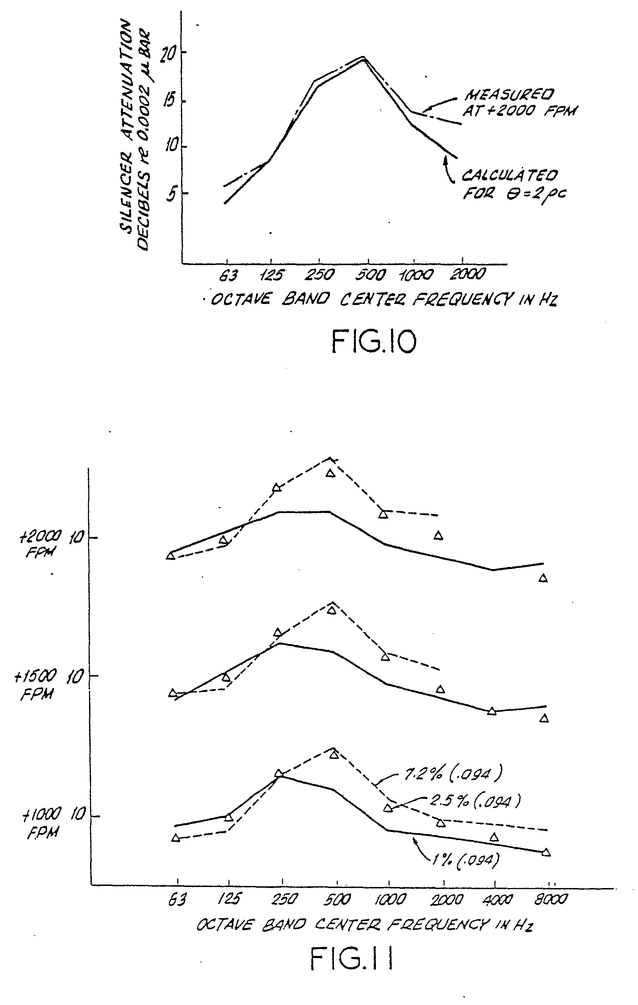

Figure 10 shows calculated packless silencer attenuation for an effective face sheet flow resistance of 2 $pc$ versus actual performance of a silencer constructed according to this invention.

Figure 11 shows attenuation of three silencers constructed according to this invention with 1. 2.5 and 7.2% perforated face open areas. This graph illustrates loss of performance with open area less than 2%.

The silencer 10 as previously discussed replaces a length of duct work in a gas passage. Although the face panels 14 are illustrated as being on opposite sides of the flow chamber, the entire flow passage may be faced with perforated face panels of the type described, e.g. rectangular or cylindrical duct with a packless duct liner.

In some applications, it may be desirable, depending upon allowable flow restriction and acoustical requirements, to arrange several silencers in series. Some of these arrangements are illustrated in Figures 3—7, wherein corresponding numerical designations indicate corresponding elements.

Figure 3 illustrates a tandem arrangement of three silencers 10 which provide a convenient means of extending the effective length of the silencer through the use of standard silencer modules.

Figure 4 illustrates a combined silencer which includes a first silencer 10 and a second silencer 20 in tandem. Silencer 20 is similar in structure to silencer 10 except that its flow passage includes a splitter element 25. Splitter 25 is generally of a flattened elliptical shape and provides perforated facing panels 25a adjacent the gas flow passages. The center of splitter 25 includes cavity partitions 25b. The procedure for selecting the hole size and open area of the face sheets is as previously described. Cavity depth and flow passage width are chosen to optimize attenuation at a higher frequency for silencer 20 than for silencer 10. This combination provides better dynamic insertion loss (DIL) in some octave bands than does a combination of two silencers of configuration 10 so that design flexibility may be increased if acoustic noise in these octave bands is critical in the application.

Figure 5 illustrates a silencer combination of silencers 10 and 20 joined by a transition member 30. Member 30 provides a tapered transition from silencer 10 to silencer 20 and includes perforated face panels 34 and a centrally disposed generally triangular shaped splitter 35 having perforated facing panels 35a adjacent the flow paths and a central longitudinal partition wall 35b. The transition member 30 is useful in improving DIL in the higher frequencies and in reducing flow restriction.

Figure 6 illustrates a pair of silencers 10 joined by a high frequency transition member 40. This arrangement similar to that shown in Figure 5, supplements DIL of similar silencers in tandem. Transition member 40 includes lateral perforated facing panels 44 which define a cavity 46 with longitudinally disposed partitions 48. A central splitter 45 of flattened elliptical shape includes perforated facing panels 45a and a longitudinal partition wall 45b.

Figure 7 illustrates a triple tuned silencer arrangement wherein the flow passage width is progressively reduced by a factor of 1/2 through three silencers, as indicated in the figure. This arrangement has application in situations where even broader range DIL is desired. The arrangement includes a silencer 10' having a flow passage width of d joined to a single splitter silencer 20' having two flow passages each d/2 in width.

Finally, silencer 50 includes three splitters 55 which further divide the flow passages to a width of d/4. Each splitter 50 includes a pair of perforated facing panels 55a and central longitudinally disposed partition wall 55b. The duct wall also includes perforated facing panels 54.

## Claims

1. A packless acoustic silencer (10, 20, 50) including a duct member (12) having a pair of opposed, upstanding sidewalls, for attenuating noise associated with a fluid medium passing through said silencer comprising:
a pair of opposed, spaced apart facing panels (14) each of which being disposed within the duct member (12) and adjacent to one of said duct sidewalls, each facing panel including a substantially flat center wall portion (14a) spaced apart from its adjacent duct sidewall and a pair of curved end wall portions, each end wall portion being connected to its adjacent duct sidewall to define a cavity (16) within each facing panel (14), the space between the facing panels (14) defining a fluid passageway bordered by each facing panel center wall portion (14a), said center wall portions being generally parallel to one another and perforated having an open area in the range of from 2 to 10%, said perforations (h) each having an effective diameter in the range of from 0.032 inch to 0.125 inch (0.8 mm to 3.2 mm) respectively for facing panels having a thickness of from about 26 gauge (0.45 mm) to 11 gauge (2.75 mm) each of the duct sidewalls and facing panel end walls being impervious to the fluid such that there is not net flow of the fluid through said facing panels.

2. A silencer according to claim 1 which further includes a fluid impervious divider member (18) disposed transversely between each facing panel and its adjacent duct sidewall such that each facing panel cavity (16) is divided into chambers, each of which communicates directly with the medium flow but not directly with each other.

3. A silencer according to claim 1 or 2 which further includes a splitter member (25) disposed between and spaced from said facing panels (14), said splitter member including a pair of opposed spaced apart substantially flat and perforated center wall portions (25), a pair of end portions, and a central longitudinal partition wall disposed between said splitter center portions (25) and extending longitudinally from one end of the splitter to the other end thereof thereby defining a splitter cavity between each splitter center wall portion and the partition wall, each of said splitter end portions and said splitter septum member being impervious to the fluid medium.

4. A silencer according to claim 3 in which the splitter member further includes first and second transverse divider members (25b) spaced apart from each other and extending transversely from one of said splitter center wall portion (25a) to the other splitter center wall portion (25a), each of said first and second transverse splitter divider members (25b) being impervious to the fluid medium and such of the perforated splitter center wall portions (25a) having an open area in the range of from 2 to 10%, said perforations each having an effective diameter in the range of from .032 inch to 0.125 inch (0.8 mm to 3.2 mm) respectively for wall portions having a thickness of from 26 gauge (0.45 mm) to 11 gauge (2.75 mm).

5. A silencer comprising a silencer (10) according to claim 1 or 2, joined in tandem with a silencer (20) according to claim 3 or 4.

6. A silencer comprising a first silencer (10) according to claim 1 or 2, and a second silencer (20) according to claim 3 or 4, and further comprising a transition member (30) disposed between said first silencer (10) and second silencer (20) providing a tapered transition from silencer 10 to silencer 20, said transition member including a pair of spaced apart perforated facing panels (34) and centrally disposed, triangular shaped transition splitter member (35) that has perforated facing panels (35a) disposed between and adjacent to a central longitudinal partition wall (35b) to define a pair of fluid passageways within said transition member, each of said transition member passageways being contiguous with the fluid passageway between the first and second silencers (10 and 20).

7. A silencer according to claim 1 or 2, comprising first and second pairs of said spaced apart facing panels (14) and a high frequency transition member (40) disposed between said first and second pairs of facing panels (14) said transition member (40) including a lateral, perforated spaced apart facing panels (44), defining a cavity (46) with longitudinally disposed partition walls (48), said transition member further including a transition splitter member (45) of a flattened elliptical shape with perforated facing panels (45a) and a longitudinal partition wall (45b).

8. A silencer according to claim 1 or 2, comprising first, second and third juxtaposed pairs of said spaced apart perforated facing panels (14, 54), an intermediate splitter member (25) disposed between and spaced apart from said second pair of facing panels (14), said intermediate splitter member including a pair of spaced apart perforated facing panels (25a) and a central longitudinally disposed partition wall (20c); and a plurality of spaced apart extreme splitter members (55) disposed between and spaced apart from said third pair of facing panels (54) each of said extreme splitter members (55) including a pair of spaced apart perforated facing panels (55a) and a longitudinally disposed partition wall (55b), the spaces between said first, second and third pairs of facing panels (14, 54) and said splitter members (25 and 55) defining progressively increasing numbers of fluid passageways, which break up the fluid medium and obstruct the fluid flow through the silencer.

9. A silencer according to claim 8 which further comprises a fluid impervious divider member (18 or 25b) disposed transversely between the duct sidewalls and the first pair of facing panels (14) and between the perforated facing panels (25a) of said intermediate splitter member (25), and wherein each of said perforated facing panels (25a, 55a) of said intermediate and extreme splitter members (25, 55) have an open area in the range of from 2 to 10%, said perforations each having an effective diameter in the range of from .032 inch to 0.125 inch (0.8 mm to 3.2 mm) respectively for facing panels having a thickness of from 26 gauge (0.45 mm) to 11 gauge (2.75 mm).

## Revendications

1. D'un silencieux acoustique sans garniture (10, 20, 50) doté d'un conduit (12) à deux parois latérales opposées et droites, et destiné à atténuer le bruit en association avec un fluide traversant ledit silencieux qui se compose:

de deux panneaux opposés et séparés (14), chacun d'eux étant disposé à l'intérieur du conduit (12) de façon adjacente à l'une desdites parois latérales du conduit, chaque panneau

comportant une partie centrale largement plate (14a) placée à distance de la paroi latérale voisine, et deux parties d'extrémité courbes, chaque partie d'extrémité étant reliée à la paroi voisine, formant ainsi une cavité (16) à l'intérieur de chaque panneau (14), l'espace séparant les deux panneaux (14) formant un passage de fluide délimité par les parties centrales (14a) des panneaux, ces parties centrales étant généralement disposées parallèlement et perforées, leur surface de perforation étant de l'ordre de 2 à 10%, et le diamètre réel desdites perforations étant respectivement de l'ordre de 0,8 mm à 3,2 mm (0,032 pouce à 0,125 pouce) pour une épaisseur de panneau de 0,45 mm (26, jauge anglaise) à 2,75 mm (11, jauge anglaise) chacune des parois latérales du conduit et des parties d'extrémité des panneaux étant étanche au fluid, de sorte que le fluide ne traverse pas lesdits panneaux.

2. D'un silencieux conforme à l'alinéa 1 comportant d'autre par un élément répartiteur (18) étanche au fluide, disposé dans le sens transversal entre chaque panneau et la paroi latérale voisine, de sorte que chacune des cavités (16) des panneaux est divisée en chambres, dont chacune communique directement avec le courant fluid mais non directement entre elles.

3. D'un silencieux conforme à l'alinéa 1 ou 2 muni en outre d'un élément déflecteur (25) placé à distance entre lesdits panneaux (14), ce déflecteur comportant deux parties centrales (25) perforées, largement plates, opposées et séparées, deux parties d'extrémité et une choison de séparation centrale disposée dans le sens longitudinal entre lesdits parties centrales (25) du déflecteur et s'étendant longitudinalement d'une extrémité à l'autre du déflecteur, délimitant ainsi une cavité entre chaque partie centrale du déflecteur et la cloison de séparation, chacune desdites parties d'extrémité du déflecteur et de ladite cloison du déflecteur étant étanches au fluide.

4. D'un silencieux conforme à l'alinéa 3, dans lequel l'élément déflecteur est pourvu par ailleurs d'un premier et d'un second éléments répartiteurs (25b) écartés l'un de l'autre et s'étendant dans le sens transversal de l'une desdites parties centrales (25a) du déflecteur à l'autre partie centrale (25a) du déflecteur, lesdits premier et second éléments répartiteurs transversaux (25b) du déflecteur étant étanches au fluide, et chacune des parties centrales perforées (25a) du déflecteur ayant une surface de perforation de l'ordre de 2 à 10%, le diamètre réel desdites perforations étant respectivement de l'ordre de 0,8 mm à 3,2 mm (0,32 pouce à 0,125 pouce) pour une épaisseur de paroi de 0,45 mm (26, jauge anglaise) à 2,75 mm (11, jauge anglaise).

5. D'un silencieux se composant d'un silencieux (10) conforme à l'alinéa 1 ou 2, accouplé en tandem avec un silencieux (20) conforme à l'alinéa 3 ou 4.

6. D'un silencieux constitué d'un premier silencieux (10) conforme à l'alinéa 1 ou 2, et d'un second silencieux (20) conforme à l'alinéa 3 ou 4, et comportant par ailleurs un élément de transition (30) placé entre le premier silencieux (10) et le second silencieux (20), assurant un passage conique du silencieux (10) au silencieux (20), ledit élément de transition comprenant deux panneaux (34) perforés et séparés ainsi qu'un déflecteur triangulaire (35), placé en position centrale, ledit déflecteur étant doté de panneaux perforés (35a), adjacents à une cloison de séparation centrale longitudinale, délimitant ainsi deux passages de fluide au sein dudit élément de transition, chacun de ces passages étant contigu au passage de fluide situé entre le premier et second silencieux (10 et 20).

7. D'un silencieux conforme à l'alinéa 1 ou 2, muni d'une première et deuxième paires de panneaux séparés (14), et d'un élément de transition haute fréquence (40) placé entre lesdites première et deuxième pares de panneaux (14), ledit élément de transition comportant des panneaux (44) latéraux perforés, séparés, délimitant ainsi une cavité (46) avec des cloisons de séparation (48) longitudinales, ledit élément de transition étant pourvu d'autre part d'un déflecteur (46) de forme aplatie et ovale à panneaux perforés (45a), et d'une cloison de séparation longitudinale (45b).

8. D'un silencieux conforme à l'alinéa 1 ou 2, composé d'une première, deuxième et troisième paires juxtaposées de panneaux (14, 54) séparés et perforés, d'un déflecteur intermédiaire (25) placé à distance entre ladite deuxième paire de panneaux (14), ledit déflecteur intermédiaire comprenant deux panneaux perforés et séparés (25a) et une cloison de séparation centrale (20c) disposée dans le sens longitudinal; et d'une pluralité de déflecteurs d'extrémité (55) écartés les uns des autres et placés à distance entre ladite troisième paire de panneaux (54), chacun de ces déflecteurs d'extrémité (56) comportant deux panneaux perforés et séparés (55a) ainsi qu'une cloison de séparation longitudinale (55b), les espaces séparant lesdites première, deuxième et troisième paires de panneaux (14, 54) et lesdits déflecteurs (25 et 55) formant un nombre progressivement coissant de passages de fluid, qui affaiblissent le fluide et entravent la circulation du fluid dans le silencieux.

9. D'un silencieux conforme à l'alinéa 8 comprenant en outre un élément répartiteur (18 ou 25b) étanche au fluide, disposé dans le sens transversal entre les parois latérales du conduit et la première paire de panneaux (14), et entre les panneaux perforés (25a) dudit déflecteur intermédiaire (25), chacun des pannaux perforés (25a, 55a) desdits déflecteurs intermédiaire et d'extrémité (25, 55) ayant une surface de perforation de l'ordre de 2 à 10%, lesdites perforations ayant respectivement un diamètre réel de l'ordre de 0,8 mm à 3,2 mm (0,32 pouce à 0,125 pouce) pour une épaisseur de panneau de 0,45 mm (26, jauge anglaise) à 2,75 mm (11, jauge anglaise).

**Patentansprüche**

1. Ein packungsloser Akustikschalldämpfer (10, 25, 50) einschließlich eines Leitungsteils mit einem Paar gegenüberliegender aufrechter Seitenwände zur Abschwächung von Geräuschen, die entstehen, wenn ein Flüssigkeitsmittel durch den vorerwähnten Schalldämpfer fleißt, bestehend aus:

einem Paar gegenüberliegender abliegender Aufschlagplatten (14), von denen jede innerhalb des Leitungsteiles (12) und neben einer der vorerwähnten Leitungsseitenwände angebracht ist, jede Aufschlagplatte umfaßt einen weitgehend flachen Mittelwandbereich (14a), der von seiner benachbarten Leitungsseitenwand ableigt und einem Paar gebogener Endwandbereiche, jeder Endwandbereich ist mit seiner benachbarten Leitungsseitenwand verbunden, um einen Hohlraum (16) innerhalb einer jeden Aufschlagplatte (14) zu bilden, der Raum zwischen den Aufschalgplatten (14) bildet einen Flüssigkeitsdurchlauf begrenzt durch alle Aufschlagplattenmittelwandbereiche (14a), die vorerwähnten Mittelwandbereiche laufen im allgemeinen parallel zueinander und sind perforiert mit einer offenen Fläche im Bereich von 2 bis 10%, die vorerwähnten Perforationen (L) haben alle einen effektiven Durchmesser im Bereich von 0.032 Zoll bis 0.125 Zoll (0.8 mm bis 3.2 mm) und die Aufschlagplatten eine Dicke von circa 26 Kaliber (0.45 mm) bis 11 Kaliber (2.75 mm), jede der Leitungsseitenwände und Aufschlagplattenendwände ist undurchlässig für die Flüssigkeit, so daß keine Flüssigkeit durch die vorerwähnten Aufschlagplatten dringt.

2. Ein Schalldämpfer gemäß Patentanspruch 1, der weiterhin ein flüssigkeitsundruchlässiges Trennungsteil (18) umfaßt, das im rechten Winkel zwischen jeder Aufschlagplatte und seiner benachbarten Leitungsseitenwand angebracht ist, so daß jeder Aufschlagplattenhohlraum (16) in Kammern unterteilt ist, die alle direkt mit dem Fluß der Masse in Verbindung stehen, die aber nicht direkt untereinander verbunden sind.

3. Ein Schalldämpfer gemäß Patentanspruch 1 oder 2, der weiterhin einen Spaltteil (25) umfaßt, angebracht und abliegend von den vorerwähnten Aufschlagplatten (14), der vorerwähnte Spaltteil umfaßt ein Paar gegenüberliegender und abliegender weitgehend flacher und perforierter Mittelwandbereiche (25), eine Paar Endbereiche und eine zentrale Längstrennwand, angebracht zwischen den vorerwähnten Spaltmittelwandbereichen (25), die längs von einem Ende des Spalters zum anderen verlaufen und somit einen Spalthohlraum zwischen jedem Spaltmittelwandbereich und der Trennwand bilden, jede der vorerwähnten Spaltendbereiche und das vorerwähnte Spaltscheidewandteil sind undurchlässig für die Flüssigkeitsmasse.

4. Ein Schalldämpfer gemäß Patentanspruch 3, wobei der Spaltteil weiterhin erste und zweite Quertrennteile (25b) umfaßt, abliegend voneinander und querlaufend von einem der vorerwähnten Spaltmittelwandbereiche (25c) zu dem anderen Spaltmittelwandbereich (25a), jedes der ersten und zweiten Querspalttrennteile (25b) ist undurchlässig für die Flüssigkeitsmasse und jeder der perforierten Spaltmittelwandbereiche (25a) hat eine offene Fläche im Bereich von 2—10%, die vorerwähnten Perforationen haben alle einen effektiven Durchmesser im Bereich von 0.32 Zoll bis 0.125 Zoll (0.8 mm bis 3.2 mm) und die Wandbereiche haben eine Dicke von 26 Kaliber (0.45 mm) bis 11 Kaliber (2.75 mm).

5. Ein Schalldämpfer bestehend aus einem Schalldämpfer (10) gemäß Patentanspruch 1 oder 2 hintereinander angeordnet mit einem Schalldämpfer (20) gemäß Patentanspruch 3 oder 4.

6. Ein Schalldämpfer bestehend aus einem ersten Schalldämpfer (10) gemäß Patentanspruch 1 oder 2 und einem zweiten Schalldämpfer (20) gemäß Patentanspruch 3 oder 4, und weiterhin bestehend aus einem Übergangsglied (30) angebracht zwischen dem vorerwähnten ersten Schalldämpfer (10) und dem zweiten Schalldämpfer (20), welches einen konischen Übergang von Schalldämpfer 10 zu Schalldämpfer 20 bildet, das vorerwähnte Übergangsglied umfaßt ein Paar abliegende perforierte Aufschlagplatten (34) und ein zentral angebrachtes dreieckiges Übergangsspaltglied (35) mit perforierten Aufschlagplatten (35a), angebracht zwischen und neben einer zentralen längsverlaufenden Trennwand (35b), um ein Paar Flüssigkeitsdurchläufe zu bilden innerhalb des vorerwähnten Übergangsgliedes, jeder der vorerwähnten Übergangsglieddurchläufe grenzt an den Flüssigkeitsdurchlauf zwischen dem ersten und dem zweiten Schalldämpfer (10 und 20) an.

7. Ein Schalldämpfer gemäß Patentanspruch 1 oder 2, bestehend aus dem ersten und dem zweiten Paar der vorerwähnten abliegenden Aufschlagplatten (14), und einem Hochfrequenzübergangsglied (40), angebracht zwischen dem vorerwähnten ersten und zweiten Paar Aufschlagplatten (14), das vorerwähnte Übergangsglied (40) umfaßt seitliche perforierte abliegende Aufschlagplatten (44), welche einen Hohlraum (46) mit längs angebrachten Trennwänden (48) bilden, das vorerwähnte Übergangsglied umfaßt weiterhin ein flaches elliptisches Übergangsspaltglied (45) mit perforierten Aufschlagplatten (45a) und einer Längstrennwand (45b).

8. Ein Schalldämpfer gemäß Patentanspruch 1 oder 2 bestehend aus dem ersten, dem zweiten und dem dritten angrenzenden Paar der vorerwähnten abliegenden perforierten Aufschlagplatten (14, 54), einem Zwischenspaltteil (25) angebracht zwischen und abliegend von dem vorerwähnten zweiten Paar Aufschlagplatten (14), das vorerwähnte Zwischenspaltteil umfaßt ein Paar abliegender perforierter Aufschlagplatten (25a) und eine zentrale längsverlaufende Trennwand (20c); und eine Vielzahl abliegender außenliegender Spaltglieder (55) angebracht zwischen und abliegend von dem vorerwähnten dritten Paar Aufschlagplatten (54), jedes der vorerwähnten außenliegenden Spaltglieder (55) umfaßt ein Paar abliegender perforierter Aufschlagplatten (55a) und eine längsverlaufende Trennwand (55b), die Räme zwischen den vorerwähnten ersten, zweiten und dritten Aufschlagplattenpaaren (14, 54) und den vorerwähnten Spaltteilen (25 und 55) bilden eine sich progressiv steigernde Anzahl von Flüssigkeitsdurchläufen, welche die Flüssigkeitsmasse zerkleinern und den Flüssigkeitsfluß durch den Schalldämpfer verhindern.

9. Ein Schalldämpfer gemäß Patentanspruch 8 weiterhin bestehend aus einem flüssigkeitsundurchlässigen Trennteil (18 oder 25b) quer angeordnet zwischen den Leitungsseitenwänden und dem ersten Paar Aufschlagplatten (14) und zwischen den perforierten Aufschlagplatten (25a) des vorerwähnten Zwischenspaltteiles (25) und wo jede der vorerwähnten perforierten Aufschlagplatten (25a, 55a) der vorerwähnten zwischen- und außenliegenden Spaltteile (25, 55) eine offene Fläche im Bereich von 2 bis 10% hat, die vorerwähnten Perforationen alle einem effektiven Durchmesser im Bereich von 0.032 Zoll bis 0.125 Zoll (0.8 mm bis 3.2 mm) haben und die Aufschlagplatten eine Dicke von 26 Kaliber (0.45 mm) bis 11 Kaliber (2.75 mm) haben.

FIG.1

FIG.2

FIG.3

0 006 955

0 006 955

FIG.4

FIG.5

FIG.6

FIG.7

2

0 006 955

FIG.8

FIG.9

0.006.955

FIG.10

FIG.11